# EUROPÄISCHE PATENTSCHRIFT

(11) **EP 0 737 704 B1**
(45) Veröffentlichungstag und Bekanntmachung des Hinweises auf die Patenterteilung: **25.08.1999**
(21) Anmeldenummer: 96105011.9
(22) Anmeldetag: 29.03.1996
(51) Int. Cl.: C08G 69/10, C08G 69/46, C08G 69/48

(54) **Verfahren zur Entfärbung von N-haltigen Polymeren**
Process for decolourising nitrogen containing polymers
Procédé de décoloration des polymères contenant de l'azote

(30) Priorität: 11.04.1995 DE 19513718; 04.08.1995 DE 19528779
(43) Veröffentlichungstag der Anmeldung: 16.10.1996
(73) Patentinhaber: BAYER AG, 51368 Leverkusen (DE)
(72) Erfinder: Groth, Torsten, Dr., 51061 Köln (DE); Joentgen, Winfried, Dr., 50769 Köln (DE); Heuer, Lutz, Dr., 47800 Krefeld (DE); Schmitz, Gerd, 51371 Leverkusen (DE)

(56) Entgegenhaltungen:
- EP-A- 0 650 995
- WO-A-92/15869
- US-A- 5 292 864
- PATENT ABSTRACTS OF JAPAN vol. 018, no. 191 (C-1186), 4.April 1994 & JP-A-05 345821 (TOSOH CORP), 27.Dezember 1993,
- DATABASE WPI Section Ch, Week 9409 Derwent Publications Ltd., London, GB; Class A60, AN 94-072017 XP002008376 & JP-A-06 025 410 (DELAMINE BV) , 1.Februar 1994

## Beschreibung

Die Erfindung betrifft ein Verfahren zur Entfärbung von N-haltigen Polymeren mit wiederkehrenden Succinyl-Einheiten mit Hilfe von aktiviertem Wasserstoff.

Die Herstellung und Verwendung von Polyasparaginsäure (PAS) und ihrer Derivate ist seit langem Gegenstand zahlreicher Veröffentlichungen und Patente.

Gemäß J. Org. Chem. 26, 1084 (1961) erfolgt die Herstellung von Polyasparaginsäure und ihrer Salze durch die thermische Polykondensation von Asparaginsäure über die Zwischenstufe Polysuccinimid (PSI). Durch Hydrolyse kann PSI in PAS überführt werden.

Eine Farbaufhellung des Polymers wird hier durch Umkristallisation über das Kupfersalz, nachfolgender Entfernung des Kupfers durch Fällung als Kupfersulfid und anschließender Dialyse der freien Säure gegen Wasser erreicht.

In US-A-4 363 797 wird die Herstellung einer nur schwach gefärbten Polyasparaginsäure durch Polykondensation einer Asparaginsäuresuspension in einem hochsiedenden Lösungsmittel in Gegenwart eines Ionenaustauschers beschrieben.

Weiterhin wird die Verwendung von 85 %iger wäßriger Phosphorsäure als Katalysator bei der Polykondensation von Asparaginsäure mehrfach angegeben (DE-A-4 023 463, J. Med. Chem. 16, 893 (1973)). Hierbei wird ein nahezu farbloses Polysuccinimid erhalten.

Die obengenannten Methoden zur Farbaufhellung beziehen sich alle auf die Herstellung von Polyasparaginsäure aus Asparaginsäure. Sie sind nicht auf Verfahren zur Herstellung von Polyasparaginsäure ausgehend von Maleinsäureanhydrid und Ammoniak wie sie beispielsweise in US-A-4 839 461 oder WO 93/23452 beschrieben sind, anwendbar.

US-A-5 292 864 beschreibt ein Verfahren zur Farbaufhellung von Polyasparaginsäure und deren Copolymeren mit Aminen mit Hilfe oxidierender Substanzen wie Hypochlorit, Chlor, Chlordioxid, Wasserstoffperoxid oder Ozon. In Beispiel 11 des Patentes wurde der Versuch beschrieben, Polyasparaginsäure-Natriumsalz unter hydrierenden Bedingungen an einem Palladiumkatalysator zu entfärben. Als Ergebnis wurde festgehalten, daß eine Farbaufhellung nicht eintrat, vermutlich infolge mangelnder Aktivierung des Wasserstoffs.

Der Erfindung lag die Aufgabe zugrunde, ein verbessertes Verfahren zur Entfärbung von N-haltigen Polymeren mit wiederkehrenden Succinyl-Einheiten, insbesondere von Polyasparaginsäure zur Verfügung zu stellen.

Die Erfindung betrifft ein Verfahren zur Entfärbung von N-haltigen Polymeren mit wiederkehrenden Succinyl-Einheiten, dadurch gekennzeichnet, daß die Entfärbung bei erhöhtem Druck von 10 bis 200 bar mit aktiviertem Wasserstoff durchgeführt wird, wobei es sich um
a) nascierenden Wasserstoff, wie er bei der Auflösung von unedlen Metallen, deren Redoxpotential kleiner als das des Wasserstoffes ist, in wäßrigen Lösungen entsteht,
b) hydridischen Wasserstoff aus Metallhydriden,
c) molekularen Wasserstoff in Gegenwart von Hydrierungskatalysatoren bei Temperaturen oberhalb von 40°C handelt.

Die Entfärbung findet hierbei unter hydrierenden Bedingungen statt. In einer bevorzugten Ausführungsform ist das zu entfärbende Polymer eine Polyasparaginsäure oder ein Derivat davon. Im Rahmen der vorliegenden Erfindung werden unter Polymeren, insbesondere Polyasparaginsäuren, auch die Salze dieser Verbindungen verstanden. Besonders bevorzugte Derivate sind insbesondere Alkalisalze wie Polyasparaginsäurenatriumsalz, Aminsalze sowie die Amide beispielsweise Polyasparagin.

In einer besonders bevorzugten Ausführungsform enthalten die Polymere wiederkehrende Einheiten wenigstens einer der folgenden Strukturen 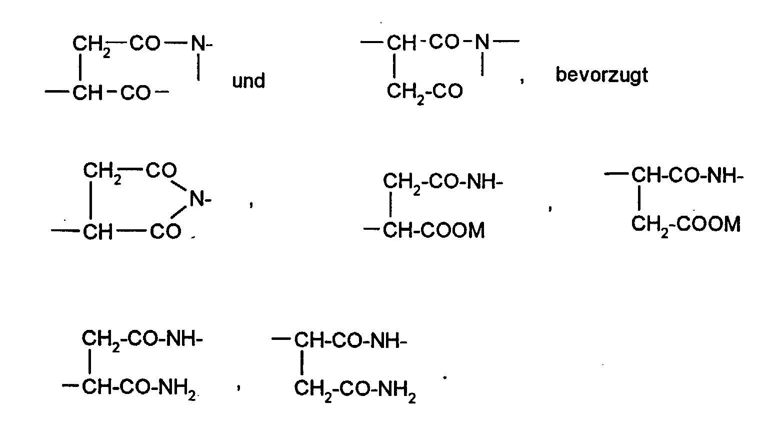 wobei
- M =: unabhängig voneinander bei mehrfachem Auftreten H, Alkali, NH₄^{⊕} oder NR₄^{⊕},
- R =: unabhängig voneinander H, Alkyl, insbesondere mit 1 - 12 C-Atomen, Hydroxyalkyl mit 1 bis 8 C-Atomen.

In einer besonders bevorzugten Ausführungsform enthält das Polymer zu wenigstens 50 Gew.-% wiederkehrende Einheiten der Strukturen 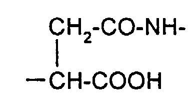 in der Säure- oder Salzform.

In einer weiteren bevorzugten Ausführungsform sind weitere, gegebenenfalls wiederkehrende Einheiten enthalten, wie z.B. 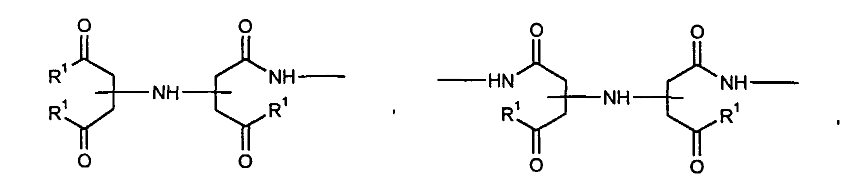 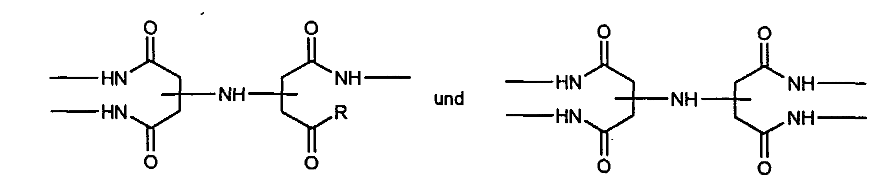 wobei
- R¹: OH, O⁻NH₄⁺ oder NH₂ bedeutet,
und/oder 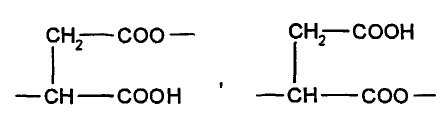 in der Säure oder Salzform.

Das hergestellte Polymer zeigt in Abhängigkeit von den Reaktionsbedingungen, beispielsweise Verweilzeit und Temperatur der thermischen Polymerisation, unterschiedliche Kettenlängen bzw. Molekulargewichte nach gelpermeationschromatographischen Analysen (Mw = 500 bis 10.000, bevorzugt 500 bis 5.000, besonders bevorzugt 700 bis 4.500). Bezogen auf die Gruppen 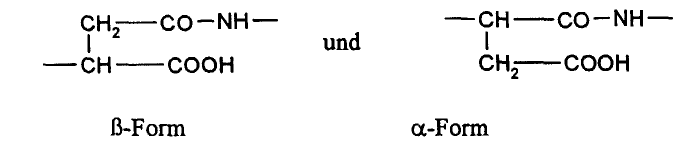 (wiederkehrende Asparaginsäureeinheiten) liegen vorzugsweise wenigstens 50%, insbesondere wenigstens 70%, β-verknüpft vor.

Die Iminodisuccinateinheiten können im Polymer statistisch verteilt oder bevorzugt als Endgruppe vorliegen. Bezogen auf die Summe aller wiederkehrenden Einheiten liegt die Iminodisuccinateinheit im allgemeinen zu wenigstens 0,1 Mol-% vor. Das molare Verhältnis der im Polymer eingebauten Iminodisuccinateinheiten zur Summe aller im Polymer eingebauten Monomereinheiten beträgt vorzugsweise 0,1 Mol-% bis 99 Mol-%, bevorzugt 1 Mol-% bis 50 Mol-%, besonders bevorzugt 2 Mol-% bis 25 Mol-%.

Der erfindungsgemäß zu verwendende aktivierte Wasserstoff kann auf unterschiedliche Weise bereitgestellt werden, insbesondere handelt es sich hierbei um
a) nascierenden Wasserstoff, wie er bei der Auflösung von unedlen Metallen, deren Redoxpotential kleiner als das des Wasserstoffes ist, in wäßrigen Lösungen entsteht,
b) hydridischen Wasserstoff aus Metallhydriden,
c) molekularen Wasserstoff in Gegenwart von Hydrierungskatalysatoren bei erhöhtem Druck und erhöhter Temperatur.

Als Quelle für nascierenden Wasserstoff a) sind alle unedlen Metalle, deren Redoxpotential kleiner als das des Wasserstoffes ist und die daher aus wäßrigen Lösungen Wasserstoff freisetzen können, geeignet. Bevorzugt sind Eisen, Magnesium, Aluminium und Zink.

Besonders bevorzugte Metallhydride b) sind Magnesiumhydrid, Calciumhydrid, Aluminiumhydrid und Borhydrid.

Zur Aktivierung c) von molekularen Wasserstoff bevorzugte Hydrierungskatalysatoren sind Edelmetallkatalysatoren auf Kohle wie beispielsweise Palladium, Platin, Rhodium oder Ruthenium oder Raney-Katalysatoren wie z.B. Raney-Eisen, Raney-Nickel oder Raney-Palladium. Die Reaktion wird unter erhöhtem Druck bei 10 bis 200 bar durchgeführt, um die Reaktionslösung mit Wasserstoff zu sättigen. Die Reaktion wird bevorzugt bei 20 bis 150 bar und besonders bevorzugt bei 20 bis 100 bar Wasserstoffdruck durchgeführt. Die Reaktionszeiten liegen vorzugsweise zwischen 0,5 und 12 h, bevorzugt zwischen 0,5 und 6 h, insbesondere zwischen 0,5 und 3 h. Die Entfärbung kann auch in diesem Fall diskontinuierlich z.B. in einem Rührkessel oder kontinuierlich in einem Verweilzeitrohr durchgeführt werden.

In das erfindungsgemäße Entfärbungsverfahren können sowohl Polyasparaginsäuren, die durch thermische Polykondensation von Asparaginsäure oder Asparagin erhältlich sind, als auch solche, die aus Maleinsäurederivaten wie Maleinsäureanhydrid oder Maleinsäure oder Fumarsäurederivaten und Ammoniak hergestellt wurden, eingesetzt werden.

Ein weiterer Gegenstand der Anmeldung ist die Entfärbung von Polyasparaginsäuren, deren Derivaten und Copolymeren durch eine Kombination von reduktiver Entfärbung mit aktiviertem Wasserstoff und anschließender weiterer Farbaufhellung mit Oxidationsmitteln. Hierbei wird die Rohware nach einem der oben beschriebenen Verfahren unter hydrierenden Bedingungen teilweise entfärbt.

In einer bevorzugten Ausführungsform kann vor oder nach der selektiven Entfärbung zur weiteren Farbaufhellung eine Behandlung mit einem Oxidationsmittel durchgeführt werden. Als Oxidationsmittel sind Luft oder Sauerstoff in Gegenwart eines Oxidationskatalysators, Wasserstoffperoxid, Ozon, anorganische Peroxide, anorganische Percarbonate z.B. Natriumpercarbonat, anorganische Persulfate, Natriumperborat, Chlor, Hypochlorite, Chlordioxid geeignet. Die oxidierend wirkenden Substanzen werden der aufzuhellenden wäßrigen Lösung vorzugsweise in 0,001 bis 10 Gew.-%, vorteilhaft in 0,01 bis 5 Gew.-% bezogen auf den in der Lösung enthaltenen Feststoff zugesetzt. Die Entfärbungsreaktion wird bei Temperaturen oberhalb von 40°C, bevorzugt bei 40°C bis 150°C gegebenenfalls unter Druck durchgeführt. Die Reaktionszeiten betragen vorzugsweise zwischen 0,5 und 12h, bevorzugt zwischen 0,5 und 6 h.

Die nach den erfindungsgemäßen Verfahren hergestellten Produkte weisen eine deutliche Farbaufhellung gegenüber den Rohprodukten auf, ohne das die anwendungstechnischen Eigenschaften negativ beeinflußt werden. Die erfindungsgemäßen Produkte sind daher besonders für den Einsatz in Verwendungsbereichen geeignet, wo die Farblosigkeit des Endproduktes von Bedeutung ist, beispielsweise als Dispergiermittel für Weißpigmente in Kosmetikanwendungen oder Waschmittelanwendungen.

Zur Entfärbung werden die aktivierten Wasserstoff liefernden Substanzen der zu entfärbenden Lösung im allgemeinen zu 0,01 bis 5 Gew.-%, bevorzugt zu 0,1 bis 2,5 Gew.-% und besonders bevorzugt zu 0,2 bis 1,5 Gew.-%, bezogen auf den zu entfärbenden Feststoff, zugesetzt.

Die Entfärbung wird vorzugsweise bei Temperaturen von 20°C bis 150°C gegebenenfalls unter Druck durchgeführt. Die Reaktionszeiten betragen bevorzugt zwischen 0,5 und 12, bevorzugt 0,5 und 6 und besonders bevorzugt zwischen 0,5 und 3 Stunden.

Die Reaktion kann diskontinuierlich in einem Rührreaktor oder kontinuierlich z.B. in einem Verweilzeitrohr durchgeführt werden.

### Beispiele

Die Farbaufhellung wurde an 40 %igen wäßrigen Lösungen in einer Küvette mit 2 cm Durchmesser in der Durchsicht optisch durch Vergleich beurteilt.

### Beispiel 1

### Entfärbung durch Hydrierung mit molekularem Wasserstoff an einem Palladium/Pulverkohle-Katalysator

100 g einer 45 %igen Polyasparaginsäure-Natriumsalz-Lösung, die aus Asparaginsäure durch thermische Polykondensation und nachfolgende Hydrolyse mit Natronlauge hergestellt wurde, wurden mit 1 g eines 5 %igen Palladium/Pulverkohle-Katalysators bei 20 bar H₂-Druck für 2 h auf 100°C erwärmt. Die ursprünglich dunkelrote Lösung entfärbte sich nach orange. Struktureigenschaften wie Molekulargewichtsverteilung und anwendungstechnische Kenngrößen wie Calciumcarbonatdispergierkapazität wurden nicht verändert.

### Beispiel 2

### Entfärbung durch Hydrierung mit molekularem Wasserstoff an einem Palladium/Stückkohle-Festbettkatalysator

100 g einer 45 %igen Polyasparaginsäure-Natriumsalz-Lösung, die durch thermische Polymerisation von Maleinanhydrid mit Ammoniak 220°C und nachfolgender Hydrolyse mit Natronlauge hergestellt wurde, wurden in einem Festbettreaktor unter 50 bar H₂-Druck bei 130°C und einer Verweilzeit von 2 h entfärbt. Aus der ursprünglich dunkelbraunen Rohlösung wurde eine hellorange Lösung erhalten.

### Beispiel 3

### Entfärbung durch Hydrierung an einem Raney-Eisen-Katalysator

100 g einer 45 %igen Polyasparaginsäure-Natriumsalz-Lösung (Herstellung gemäß Beispiel 2) wurden unter 90 bar H₂-Druck bei 150°C für 0,5 h hydriert. Die ursprünglich dunkelbraune Rohlösung entfärbte sich nach orange.

### Beispiel 4

### Umsetzung mit Zinkpulver

100 g einer nach Beispiel 2 hergestellten 45 %igen wäßrigen Polyasparaginsäure-Natriumsalz-Lösung wird mit 0,5 g Zinkpulver versetzt, auf 80°C erwärmt und 1 h bei dieser Temperatur gerührt. (Bei 50°C setzt die Entwicklung von nascierendem Wasserstoff langsam ein). Nach beendeter Reaktion wird vom Zink abfiltriert. Die dunkelbraune Lösung hat sich nach orange entfärbt.

### Beispiel 5

Entfärbung nach Beispiel 4 jedoch unter Verwendung von 0,5 g Aluminiumpulver anstelle von Zink. Es trat eine Farbaufhellung von dunkelbraun nach hellorange ein.

### Beispiel 6

Entfärbung nach Beispiel 4 unter Verwendung von 0,5 g Magnesiumpulver. Es trat eine Farbaufhellung von dunkelbraun nach gelborange ein.

### Beispiel 7

### Entfärbung eines Polyasparaginsäure-Copolymers

Ein Copolymer wurde durch thermische Polymerisation von Maleinamidsäureammoniumsalz und Acrylsäureammoniumsalz in der Schmelze bei 200°C hergestellt. Man erhielt einen rötlich braunen Feststoff, der nach Hydrolyse mit Natronlauge und Auflösen in Wasser eine schwarzbraune 45 %ige wäßrige Lösung ergab. 100 g dieser Lösung wurden mit 0,5 g Zinkpulver für 1 h auf 80°C erwärmt. Hierbei trat wieder eine Farbaufhellung nach orange ein.

### Beispiel 8

### Entfärbung eines Polyasparaginsäurederivates

Ein Polysuccinimid, welches durch Polymerisation von Maleinamidsäure bei 160°C bis 180°C in einer Schnecke hergestellt wurde, wurde in DMF gelöst und mit 3 Mol-% Stearylamin teilweise geöffnet. Nach Entfernen des Lösungsmittels erhielt man einen rötlichen Feststoff. Die noch ungeöffneten Succinimidgruppen des Aminderivates wurden dann mit Natronlauge zum Natriumsalz geöffnet. 100 g einer 45 %igen wäßrigen Lösung dieser Verbindung wurden unter 40 bar H₂-Druck mit 1 g eines 5 %igen Palladium/Pulver-Katalysators bei 110°C für 2 h umgesetzt. Hierbei trat eine Farbaufhellung von rot nach gelborange ein.

### Beispiel 9

### Entfärbung eines Polyasparaginsäurederivates durch die Kombination aus reduktiven und oxidativen Methoden

100 g einer 45 %igen wäßrigen Lösung des nach Beispiel 8 aufgehellten Polyasparaginsäurederivates wurde mit 1 g einer 30 %igen H₂O₂-Lösung versetzt und für 1 h auf 50 bis 80°C erwärmt. Hierbei trat eine Farbaufhellung von gelborange nach hellgelb ein.

## Patentansprüche

1. Verfahren zur Entfärbung von N-haltigen Polymeren mit wiederkehrenden Succinyl-Einheiten, dadurch gekennzeichnet, daß die Entfärbung bei erhöhtem Druck von 10 bis 200 bar mit aktiviertem Wasserstoff durchgeführt wird, wobei es sich um
a) nascierenden Wasserstoff, wie er bei der Auflösung von unedlen Metallen, deren Redoxpotential kleiner als das des Wasserstoffes ist, in wäßrigen Lösungen entsteht, oder
b) hydridischen Wasserstoff aus Metallhydriden, oder
c) molekularen Wasserstoff in Gegenwart von Hydrierungskatalysatoren
handelt.

2. Verfahren nach Anspruch 1, dadurch gekennzeichnet, daß das Polymer eine Polyasparaginsäure oder ein Derivat davon ist.

3. Verfahren nach wenigstens einem der vorhergehenden Ansprüche, dadurch gekennzeichnet, daß das Polymer wiederkehrende Einheiten wenigstens einer der folgenden Strukturen aufweist 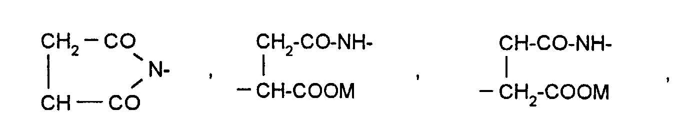 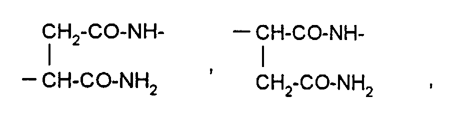 wobei
M= unabhängig voneinander bei mehrfachem Auftreten H, Alkali, NH₄ oder NR₄,
R= unabhängig voneinander H, Alkyl, insbesondere mit 1-12 C-Atomen, Hydroxyalkyl mit 1 bis 8 C-Atomen.
oder eines Salzes davon.

4. Verfahren nach wenigstens einem der vorhergehenden Ansprüche, dadurch gekennzeichnet, daß das Polymer zu wenigstens 50 Gew.-% wiederkehrende Einheiten der Strukturen 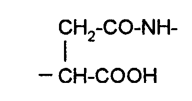 aufweist, oder eines Salzes davon.

5. Verfahren nach wenigstens einem der vorhergehenden Ansprüche, dadurch gekennzeichnet, daß das Polymer ein Copolymer ist, welches zusätzlich zu den wiederkehrenden Succinyl-Einheiten gegebenenfalls wiederkehrende Einheiten folgender Formel aufweist 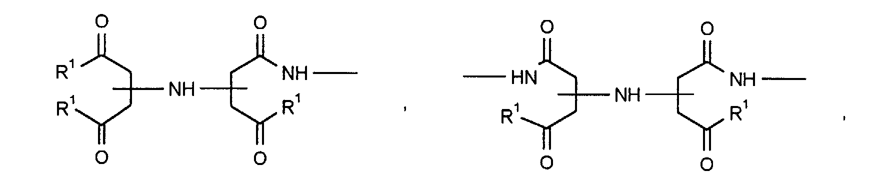 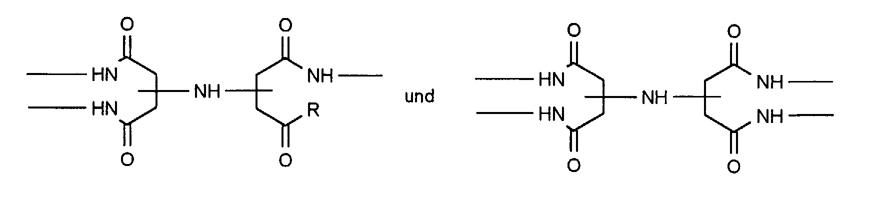 wobei
R¹ = OH, O⁻NH₄⁺ oder NH₂
oder eines Salzes davon.

6. Verfahren nach Anspruch 1, dadurch gekennzeichnet, daß der Hydrierungskatalysator ein Edelmetall- oder ein Raneykatalysator ist.

7. Verfahren nach Anspruch 1, dadurch gekennzeichnet, daß der nascierende Wasserstoff durch die Auflösung von unedlen Metallen in der Reaktionslösung erhalten wird.

8. Verfahren nach Anspruch 1, dadurch gekennzeichnet, daß als aktivierter Wasserstoff hydridischer Wasserstoff eingesetzt wird.

9. Verfahren zur Entfärbung von N-haltigen Polymeren gemäß Anspruch 1, dadurch gekennzeichnet, daß zusätzlich eine oxidative Behandlung der N-haltigen Polymeren durchgeführt wird.

10. Verfahren zur Entfärbung von N-haltigen Polymeren mit wiederkehrenden Succinyleinheiten, dadurch gekennzeichnet, daß die Entfärbung drucklos mit nascierenden Wasserstoff, wie er bei der Auflösung von unedlen Metallen, deren Redoxpotential kleiner als die des Wasserstoffes ist, in wäßrigen Lösungen durchgeführt wird.

## Claims

1. Process for decolorizing N-containing polymers having repeating succinyl units, characterized in that the decolorization is carried out at elevated pressure of 10 to 200 bar with activated hydrogen, this relating to
a) nascent hydrogen, as formed in the dissolution in aqueous solutions, of base metals whose redox potential is below that of hydrogen, or
b) hydridic hydrogen from metal hydrides, or
c) molecular hydrogen in the presence of hydrogenation catalysts.

2. Process according to Claim 1, characterized in that the polymer is a polyaspartic acid or a derivative thereof.

3. Process according to at least one of the preceding claims, characterized in that the polymer contains repeating units of at least one of the following structures 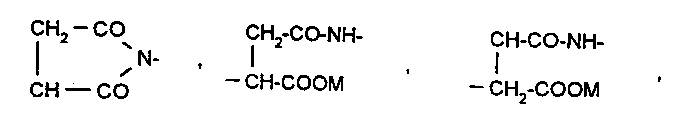 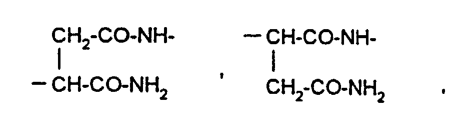 in which
M = independently of each other on multiple occurrence H, alkali metal, NH₄ or NR₄,
R = independently of each other H, alkyl, in particular having 1-12 C atoms, hydroxyalkyl having 1 to 8 C atoms,
or a salt thereof.

4. Process according to at least one of the preceding claims, characterized in that the polymer contains at least 50% by weight of repeating units of the structures 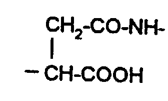 or a salt thereof.

5. Process according to at least one of the preceding claims, characterized in that the polymer is a copolymer which, additionally to the repeating succinyl units, if appropriate contains repeating units of the following formulae 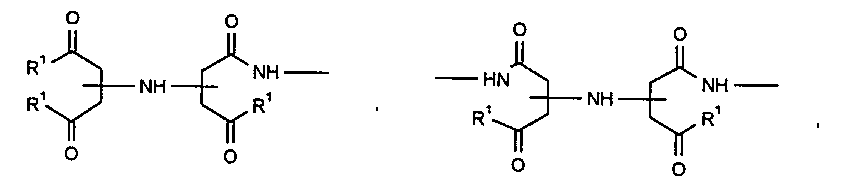 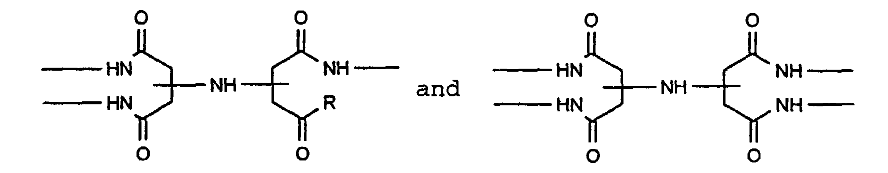 in which R¹ = OH, O⁻NH₄⁺ or NH₂
or a salt thereof.

6. Process according to Claim 1, characterized in that the hydrogenation catalyst is a noble metal catalyst or a Raney catalyst.

7. Process according to Claim 1, characterized in that the nascent hydrogen is obtained by the dissolution of base metals in the reaction solution.

8. Process according to Claim 1, characterized in that the activated hydrogen used is hydridic hydrogen.

9. Process for decolorizing N-containing polymers according to Claim 1, characterized in that an oxidative treatment of the N-containing polymers is additionally carried out.

10. Process for decolorizing N-containing polymers having repeating succinyl units, characterized in that the decolorization is carried out without pressure with nascent hydrogen, as formed in the dissolution, in aqueous solutions, of base metals whose redox potential is below that of hydrogen.

## Revendications

1. Procédé pour la décoloration de polymères contenant N avec des unités succinyle répétitives, caractérisé en ce que l'on réalise la décoloration à une pression élevée de 10 à 200 bar avec de l'hydrogène activé, dans lequel il s'agit
(a) d'hydrogène naissant comme il est produit dans des solutions aqueuses lors de la dissolution de métaux non précieux dont le potentiel Redox est inférieur à celui de l'hydrogène, ou
(b) d'hydrogène d'hydrure à partir d'hydrures métalliques, ou
(c) d'hydrogène moléculaire en présence de catalyseurs d'hydrogénation.

2. Procédé selon la revendication 1, caractérisé en ce que le polymère est un acide polyaspartique ou un dérivé de celui-ci.

3. Procédé selon au moins l'une quelconque des revendications précédentes, caractérisé en ce que le polymère présente des unités répétitives d'au moins une des structures suivantes 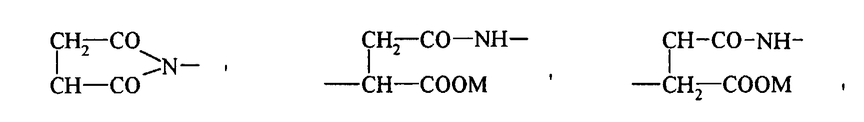 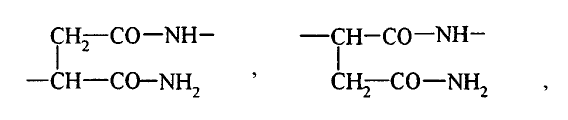 dans lesquelles
M = H, un alcali, NH₄ ou NR₄ indépendamment des nombreuses apparitions,
R = indépendamment H, un groupe alkyle en particulier avec 1-12 atomes C, un groupe hydroxyalkyle avec de 1 à 8 atomes C
ou un sel de celles-ci.

4. Procédé selon au moins l'une quelconque des revendications précédentes, caractérisé en ce que le polymère présente au moins 50% en poids d'unités répétitives de la structure 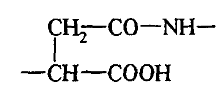 ou d'un sel de celle-ci.

5. Procédé selon au moins l'une quelconque des revendications précédentes, caractérisé en ce que le polymère est un copolymère qui présente en plus des unités succinyle répétitives éventuellement des unités répétitives des formules suivantes 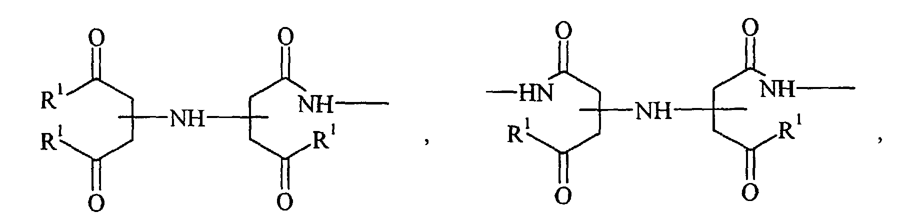 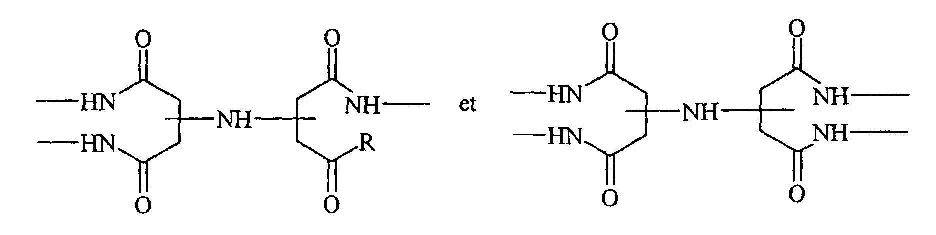 dans lesquelles R¹ = OH, O⁻NH₄⁺ ou NH₂
ou un sel de celles-ci.

6. Procédé selon la revendication 1, caractérisé en ce que le catalyseur d'hydrogénation est un catalyseur de métal précieux ou un catalyseur Raney.

7. Procédé selon la revendication 1, caractérisé en ce que l'hydrogène naissant est obtenu par la dissolution de métaux non précieux dans la solution réactionnelle.

8. Procédé selon la revendication 1, caractérisé en ce que l'on utilise comme hydrogène activé de l'hydrogène d'hydrure.

9. Procédé pour la décoloration de polymères contenant N selon la revendication 1, caractérisé en ce que l'on réalise en outre un traitement oxydant des polymères contenant N.

10. Procédé pour la décoloration de polymères contenant N avec des unités succinyle répétitives, caractérisé en ce que l'on réalise la décoloration sans pression avec de l'hydrogène naissant comme il est obtenu dans des solutions aqueuses lors de la dissolution de métaux non précieux dont le potentiel Redox est inférieur à celui de l'hydrogène.
